# EUROPEAN PATENT SPECIFICATION

(11) **EP 1 788 355 B1**
(45) Date of publication and mention of the grant of the patent: **23.02.2011**
(21) Application number: 05025081.0
(22) Date of filing: 16.11.2005
(51) Int. Cl.: G01C 21/36

(54) **Electronic route display system and navigation system comprising the same**
Elektronisches Routenanzeigesystem und Navigationssystem damit
Système d'affichage électronique d'itinéraire et système de navigation l'utilisant

(43) Date of publication of application: 23.05.2007
(73) Proprietor: Alpine Electronics, Inc., Tokyo, 141 (JP)
(72) Inventor: Wittig, Dirk, c/o Alpine Electr. R&D Europe GmbH, 70567 Stuttgart (DE)
(74) Representative: Klunker . Schmitt-Nilson . Hirsch

(56) References cited:
- EP-A- 1 441 196
- US-A- 5 787 383
- US-A1- 2004 186 662
- US-B1- 6 567 744
- PATENT ABSTRACTS OF JAPAN vol. 2000, no. 21, 3 August 2001 (2001-08-03) -& JP 2001 117489 A (MATSUSHITA ELECTRIC IND CO LTD), 27 April 2001 (2001-04-27)
- PATENT ABSTRACTS OF JAPAN vol. 2003, no. 12, 5 December 2003 (2003-12-05) -& JP 2005 010384 A (XANAVI INFORMATICS CORP), 13 January 2005 (2005-01-13)
- PATENT ABSTRACTS OF JAPAN vol. 2003, no. 12, 5 December 2003 (2003-12-05) -& JP 2005 241613 A (HITACHI LTD), 8 September 2005 (2005-09-08)

## Description

### BACKGROUND OF THE INVENTION

### Field of the invention

The present invention is directed to an electronic route display system comprising a display screen adapted to display a map image and a display control unit for generating image control signals for displaying the map image on the display screen. Further, the invention is directed to a navigation system comprising such electronic route display system, and more generally to a computer system comprising such electronic route display system. Further, the invention is directed to a method for displaying a route within a map image, according to which a map image including the route is displayed on a display screen. The system and the method can be used for a vehicle navigation system or for a computerized route searching and calculating system and road book visualization.

### Description of the related art

A commonly known navigation system detects the position of a vehicle for performing vehicle route guidance, wherein the current position of the vehicle is generally detected by using a navigation sensor in the vehicle, a receiver such as a GPS (Global Positioning System) receiver, and map data corresponding to an area surrounding the detected position. For example, the map data is read from a recording medium such as a CD-ROM or a DVD. The navigation system displays a map image on a display screen and displays a mark indicating a current position of the vehicle. Here, the vehicle position mark is superimposed at a predetermined position of the map image.

Moreover, such a navigation system usually has route guidance function, wherein the navigation system can search for a route that leads from a start point to a destination predetermined by the user of the navigation system. As the current position of the vehicle changes with the movement of the vehicle, the vehicle position mark is moved along the route on the display screen, or a map image adjacent to the vehicle is scrolled while the vehicle position mark persists at a predetermined point on the display screen.

Generally, map data is classified into different function classes from higher function class map data containing data such as motorways, highways or important connecting streets, or points of interest of supra-regional importance, to lower function class map data containing data such as smaller streets or points of interest of only regional importance. In most navigations systems, the map can be displayed on the scale requested by the user for displaying, e.g. in a first mode, map data of only the higher function class or, in a second mode, for displaying map data of both higher and lower function classes. In the second display mode, a smaller zoom level is used for displaying the streets of all function classes, and displaying the route that leads from a predetermined start point to a predetermined destination as set by the user. In such displaying mode, the driver is enabled to leave the calculated route by searching and finding alternative streets on the displayed map image by himself, including streets of the lower function class.

However, when a small display scale is selected for displaying streets of all function classes, only a map of a small area surrounding the vehicle position is displayed in detail on the screen, otherwise there is a risk that the map image gets overcrowded as regards the displayed details. This may, however, result in a map image of only a small area which displays only a small portion of the predetermined guidance route. On the other hand, increasing the map area displayed on the display screen may result in an overcrowded map view in which it is difficult for the user to differentiate important information from less important information. In particular, it is difficult for the user to recognize important information at one look. This may reduce the safety in driving a vehicle as the driver may be distracted for quite a long time when trying to recognize the important information on the map image.

In US 2004/0186662 A1 there is disclosed a navigation system in which a detailed map of an area surrounding the vehicle is displayed in a window on a monitor on the scale designated by the user, and main roads extending outside of the map displayed in the window are displayed in a deformed image around the window. In particular, only the main roads are displayed outside the window containing the detailed map. This allows the user to grasp detailed information about the area surrounding the vehicle, main roads ahead of the vehicle, and the connections between the vehicle and the main roads at a glance in a single window. A disadvantage of the prior art described therein is, that the window displaying the detailed map of an area surrounding the vehicle is fixed to the car position, so that the window is calculated with respect to the car position within a predetermined distance from the vehicle. Such predetermined distance is, for example, three miles. This, however, may result in reduced operability of the navigation system.

In JP 2001 117489 A there is disclosed a navigation system having computation processing means which generates and plots a map image to be displayed on a display screen on the basis of the vehicle position, the guiding route and the map information. The processing means computes a region having a constant width along the route, wherein the map image contains different regions with the inner region being more detailed than the outside region, and the inner region containing the guidance path.

In JP 2005 010384 A there is provided a map display method of an on-vehicle information terminal capable of performing map display by superposition of maps varying in fineness.

In JP 2005 241613 A there is disclosed a navigation system which produces a map in a shape which is in line with a guidance route and which reduces amount of data of a map near the route. The map is more detailed than the map view surrounding the route circumference map.

### SUMMARY OF THE INVENTION

It is therefore an object of the present invention to improve route guidance and the operability of an electronic route display system in a way that the user, e.g. the driver of a vehicle, is enabled to recognize important guidance information from the display screen in an easy way.

In order to solve this problem, the invention provides an electronic route display system according to claim 1. Moreover, the invention is directed to a navigation system comprising such electronic route display system according to claim 17, which navigation system may be implemented within a vehicle. Further, the invention is directed to a computer system comprising such electronic route display system according to claim 19. Further, there is provided a method for displaying a route within a map image, the method comprising the steps as specified in claim 20. Embodiments and advantageous features thereof are indicated in the dependent claims.

In particular, the invention provides an electronic route display system comprising a display screen adapted to display a map image and a display control unit for generating image control signals for displaying the map image on the display screen. The display control unit is adapted to process route data which are indicative of a calculated route. Further, the display control unit is adapted to generate partial image control signals for generating a partial view within the map image, and is adapted to generate vicinity image control signals for generating a vicinity view within the map image adjacent to the partial view, wherein the partial view displays map data in greater detail than the vicinity view. The display control unit generates the partial view depending on the route data, wherein the partial view is generated including at least a portion of the route.

According to the invention, a route guidance system using an electronic route display system according to the invention is improved in its operability. Specifically, the user, e.g. the driver of a vehicle, is enabled to recognize important guidance information from the display screen in an easy way, wherein the displayed map image containing the more detailed partial view and the less detailed vicinity view is adapted to the route data. Moreover, according to the invention the overview of the displayed map image is improved, wherein relevant lower function class information is displayed only within the partial view. Thus, important information of the map image may easily be recognized by the user at one look. This results in a more relaxed navigation handling and perception. Advantageously, the user has still the possibility to take streets which are not on the route, e.g. when a traffic jam occurs on the predetermined route, wherein additionally the user can easily find the way back to the original calculated route which represents the most effective route guidance to the destination. Moreover, the attractiveness of a map image may be increased.

The electronic route display system according to the invention may be part of a navigation system, e.g. a vehicle navigation system, or may be part of a computer system, such as a PC (Personal Computer), a mobile computer such as a notebook, a PDA (Personal Digital Assistant), a mobile telephone, or the like. In the following description and in the claims, the term computer or computer system is used without further explanation as to the above mentioned examples, such computer or computer system described is to comprise all above mentioned types of computers and mobile phones and the like. The electronic route display system according to the invention may be adapted to display route guidance information and/or to display road book or manoeuvre lists. The present invention can be used for displaying navigation guidance on a display screen or for displaying manoeuvre lists as a map image on a display screen of a computer of the above mentioned types.

According to an embodiment of the invention, the display control unit generates the partial view in a dynamical manner, for example in accordance with the vehicle's position on the calculated route and/or in accordance with the calculated route data which may change. Moreover, according to a further embodiment of the invention, the display control unit generates the partial view including map data of at least a first function class and a second function class, and generates the vicinity view including map data of only the first function class. In particular, the map data of the first function class may predominantly have supra-regional importance for the user, and the map data of the second function class may have predominantly regional importance for the user. For example, the map data of the first function class represent map data of a higher function class including map data of supra-regional importance, such as one or more of the following streets: a highway, a motorway and an important connecting street. On the other hand, the map data of the second function class may represent map data of only a lower function class, such as less important streets of only regional importance for the user.

According to another embodiment of the invention, this may be applied analogously to other map data such as street labelling data, street naming data, train track data, landmark data and/or other GUI (Graphical User Interface) elements. Further, the map data may include points of interest of a first function class, e.g. a higher function class, and points of interest of a second function class, e.g. a lower function class. The map data of the first function class may include points of interest and/or other GUI elements of supra-regional importance, and the map data of the second function class may include points of interest and/or other GUI elements of only regional importance.

According to a further embodiment of the invention, the display control unit generates the partial view including map data predominantly in front of a user's current position on the calculated route and/or in front of a user's current position as seen from the user's driving or moving direction. Accordingly, the user may easily recognize the route in front of the user's current position and may easily recognize streets within the partial view which are flanking the indicated route, so that the user has the possibility to leave the indicated route, e.g. in case of a traffic jam on the original calculated route.

According to another embodiment of the invention, the display control unit generates the partial view depending on map data in proximity of the calculated route. In particular, the display control unit may generate the partial view depending on at least one of the following map data: a bridge, a border, a one-way street and a river in proximity of the calculated route. For example, in case that a river runs along the predetermined route in proximity thereof, and if there is no bridge in proximity of the user's current position for crossing the river, the partial view only includes map data referring to the side of the river at which the predetermined route runs along, whereas the map data referring to the other side of the river remote from the predetermined route are only displayed in the vicinity view, as there is no possibility for the driver to take streets on the side of the river remote from the predetermined route. This may be applied analogously in connection with other map data in proximity of the calculated route, such as the types of map data as stated before.

According to the invention, the display control unit generates the partial view depending on a speed value. For example, if the user takes a highway with an allowed speed of e.g. 100 km/h the partial view may be extended as a result of the increased speed, whereas the partial view may be reduced when the user takes a regional street with an allowed speed of e.g. 50 km/h. Moreover, the shape of the partial view may be adapted depending on the speed value.

According to a further embodiment of the invention, the display control unit generates a corridor-like partial view within the map image for effectively adapting the partial view around a portion of the route displayed on the display screen. For example, the display control unit is adapted to generate the partial view of substantially elliptical shape. However, other suitable shapes may be used which are specifically adapted to the specific circumstances in which the electronic route display system operates.

According to a further embodiment of the invention, the display control unit is adapted for creating an image area for displaying the partial view comprising the following steps. In a first step, a user's current position and route data indicative of a calculated route are determined. In a subsequent step, a first location behind and a second location in front of the user's current position on the calculated route are defined, wherein a connection is defined between the first and the second location. The display control unit creates the image area surrounding this connection as the image area for displaying the partial view.

The second location or any other such location may be created by the display control unit at a change of direction point or at a manoeuvre point on the calculated route. For example, the display control unit determines the change of direction point at a route point at which a change of the route direction in a specified angle occurs, such as an angle of at least 45°.

In a further embodiment of the invention, the display control unit is adapted for creating the image area for displaying the partial view including the following steps. In a first step, a user's current position and route data indicative of a calculated route are determined. Then, a first location behind and a second location in front of the user's current position on the calculated route are defined. A third location between the first location and the second location on the calculated route is defined, wherein a first connection between the first location and the third location is determined. Further, a second connection between the third location and the second location or any other fourth location between the third location and the second location on the calculated route is defined. Finally, an image area surrounding the first connection and the second connection as an image area for displaying the partial view is created. In this concern, any other number of points between the first location and the second location on the calculated route may be defined, for example on any distinctive points on the route, such as a change of direction point.

Further advantageous features and embodiments of the invention are evident from the dependent claims.

### BRIEF DESCRIPTION OF THE DRAWINGS

The invention will now be explained in more detail by means of embodiments and accompanying drawings, in which:
- Fig. 1: shows a schematic diagram illustrating an embodiment of a vehicle navigation system;
- Fig. 2: shows a schematic diagram illustrating, according to an embodiment, a map information memory, a vehicle position detection device, a guidance route storing unit and a display control unit generating a map image having a partial view and a vicinity view according to the invention;
- Fig. 3: shows the map image of Fig. 2 in greater detail;
- Fig. 4: illustrates various sequential steps in a process of generating a map image according to an embodiment of the invention;
- Fig. 5: illustrates various sequential steps in a process of generating a map image according another embodiment of the invention;
- Fig. 6: illustrates various embodiments of creating a partial view within a map image according to the invention.

### DESCRIPTION OF EMBODIMENTS

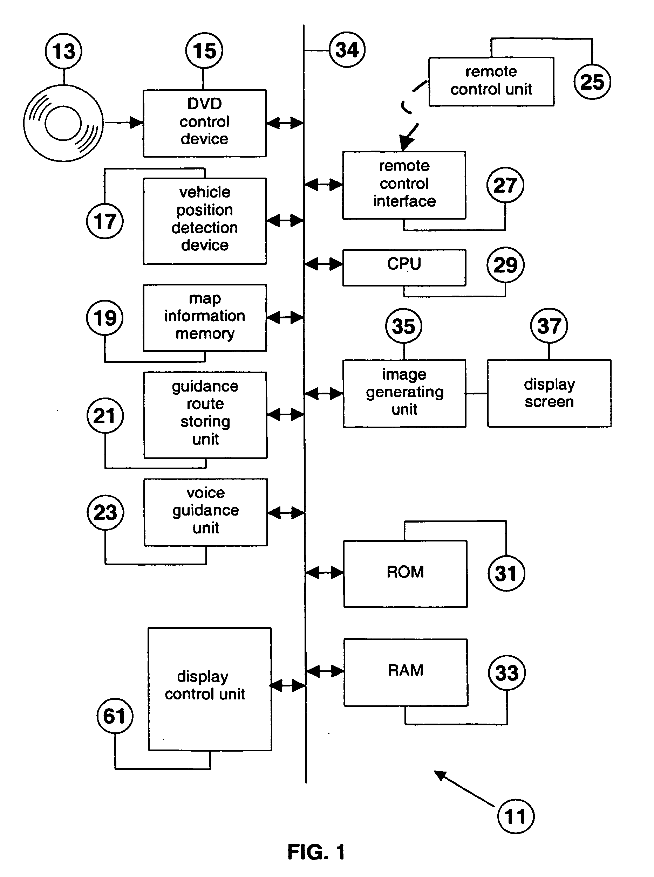

Fig. 1 is a schematic diagram illustrating an implementation of an embodiment of a navigation system 11, which is e.g. implemented in a vehicle. The navigation system 11 includes a recording medium 13 such as a DVD ROM or any other memory type suitable for storing map data. The recording medium 13 serves as a map storage medium for storing a digital map. A DVD control device 15 is for reading the predetermined map from the recording medium 13, and a vehicle position detection device 17 is for detecting a vehicle position. The vehicle position detection device 17 has a range sensor for generating a pulse every time the vehicle passes through a predetermined distance, an angle sensor for measuring the driving direction of the vehicle, and a receiving unit such as a global positioning system (GPS) receiving unit. Further, the navigation system 11 includes a map information memory 19 for storing digital map information read from the recording medium 13, a guidance route storing unit 21 for storing information related to the searched guidance or navigation route to the destination predetermined by the user. Optionally, a voice guidance unit 23 for voice guidance at a manoeuvre point along the calculated route is included in the navigation system 11. A remote control unit 25, or any other input device, may be used for entering inputs such as menu selection, map scrolling, search for a route to the destination or the like, which remote control unit 25 is, in the present example, in interaction with a remote control interface 27.

The navigation system 11 further includes a processor (CPU) 29 for controlling the overall operation of the navigation system in interaction with the stored programs, a ROM 31 for storing a guidance route search program or the like, a RAM 33 for storing processed results, an image generating unit 35 for generating a map image based on the map information and guidance route data, and a display screen 37. The digital map information stored in the map information memory 19 includes, for example, street type data, data concerning the type of points of interest (POI type data), street name data, allowed vehicle speed, or other data such as graphical user interface elements (GUI elements) used for street labelling or the like. The navigation system 11 further comprises a display control unit 61 for generating image control signals for displaying the map image on the display screen 37 in interaction with the image generating unit 35. All of the above mentioned components implemented in the navigation system 11 are connected via a data bus 34 under the control of the CPU 29.

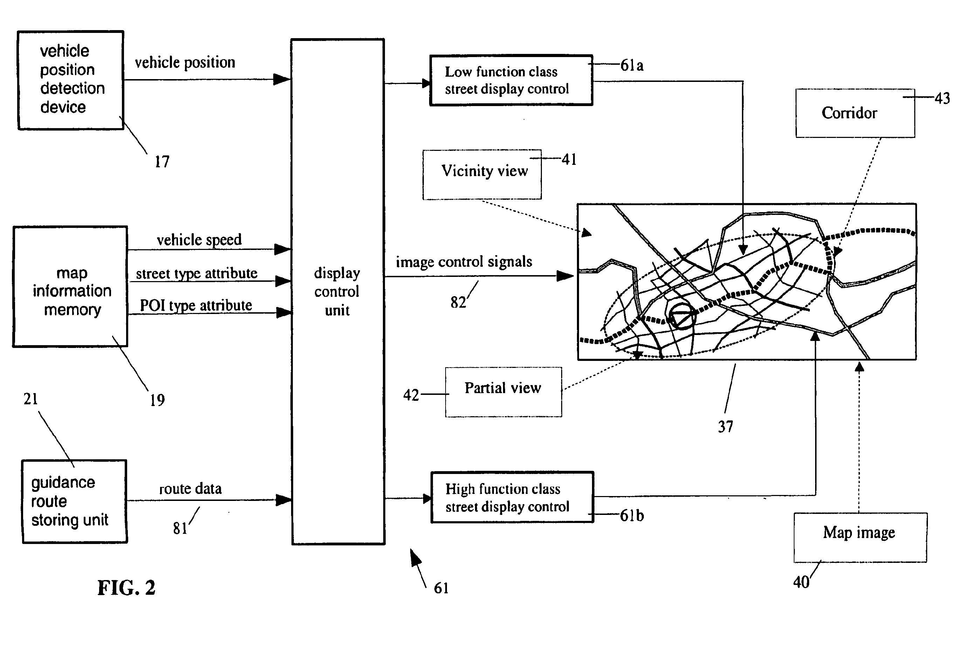

In Fig. 2 a schematic diagram is shown which illustrates, according to an embodiment of the invention, the map information memory 19, the vehicle position detection device 17, the guidance route storing unit 21 and the display control unit 61 interacting for generating a map image 40 in accordance with the invention.

The display control unit 61 receives route data 81 from the guidance route storing unit 21, which route data 81 define or indicate a calculated guidance route. Moreover, the display control unit 61 receives the vehicle position from the vehicle position detection device 17. Street type attributes and POI type attributes are received from map information memory 19 and, optionally, the respective average or allowed vehicle speed in accordance with the used street type is also received from map information memory 19. These data as received by the display control unit 61 are processed therein for generating image control signals 82 for displaying the map image 40 on the display screen 37 in interaction with the image generating unit 35 (Fig. 1).

As shown on the right hand side of Fig. 2, the display control unit 61 is adapted to generate partial image control signals for generating a partial view 42 within the map image 40. Further, the display control unit 61 is adapted to generate vicinity image control signals for generating a vicinity view 41 within the map image 40 adjacent to the partial view 42 for displaying the environmental area adjacent to the image area within the partial view, wherein in the present embodiment the vicinity view 41 surrounds the partial view 42. As explained herein in more detail below, the partial view 42 displays map data in greater detail than the vicinity view 41 which is, in the present embodiment, ambient the partial view 42. According to the present embodiment, streets of higher importance, e.g. like highways, motorways and important connecting streets are displayed on the display screen 37 over the whole map image 40 in both the partial view 42 and the vicinity view 41. These types of streets represent map data of a first, higher function class which predominantly have supra-regional importance for the driver of the vehicle. The display of map data of this higher function class is controlled by a high function class street display control 61 b schematically shown as a part of the display control unit 61 in Fig. 2. Smaller streets of lower importance, e.g. of only regional importance for the driver are displayed only in the partial view 42 including at least a portion of the calculated route, which is highlighted in the map image 40. Such types of streets represent map data of a second, lower function class, wherein the display of such low function class streets is controlled by low function class street display control 61 a as a further part of the display control unit 61 shown in Fig. 2.

The display control unit 61 comprises analogous controls for displaying points of interest of different types in the vicinity view and the partial view, respectively. For example, the map data of the first, higher function class include points of interest (POI) of supra-regional importance, whereas the map data of the second, lower function class include points of interest of only regional importance. Generally, the display control unit 61 generates the partial view 42 including map data of the first, higher function class and of the second, lower function class, and generates the vicinity view 41 including map data of only the first, higher function class as shown with the map image 40 according to Fig. 2.

In the present embodiment, the display control unit 61 generates a corridor 43 which includes the partial view 42, which corridor 43 is of substantially elliptical shape as shown in Fig. 2.

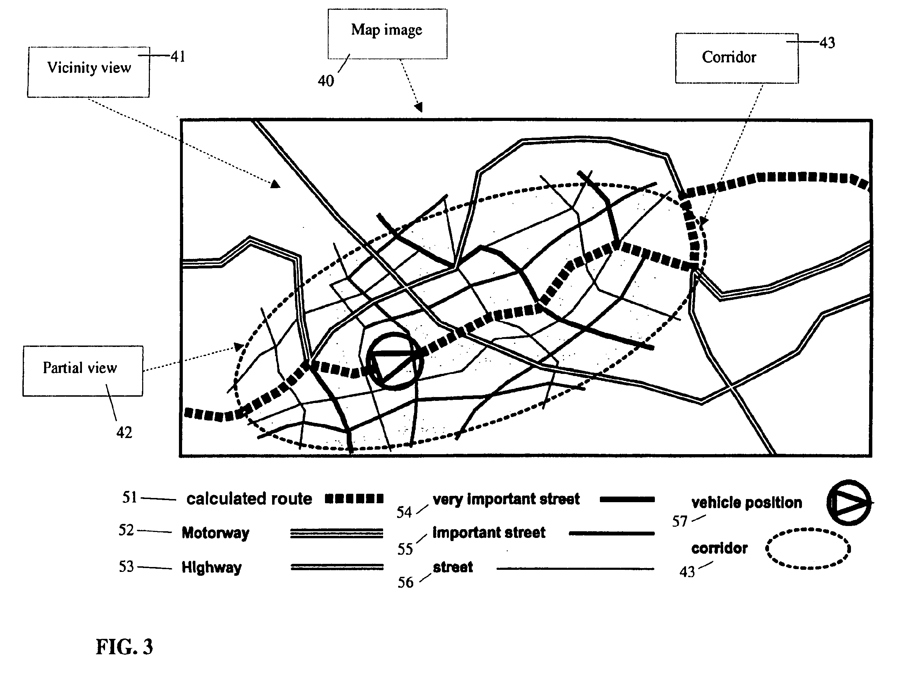

Fig. 3 of the invention is described with reference to different types of streets which are included in different map data function classes as described herein before, wherein the invention can analogously be applied for displaying a map image including additional or other types of map information as already stated before. As can be seen from Fig. 3, the vicinity view 41 includes streets of only the higher function class such as a motorway 52 and a highway 53 of supra-regional importance for the driver. The partial view 42 includes streets of both higher and lower function classes, including motorways 52 and highways 53 of the higher function class, and additionally very important streets 54, important streets 55 and simple streets 56 of the lower function class, which streets are only having regional importance for the driver. The calculated route 51, which serves for guidance of the user, is highlighted throughout the whole map image 40. As a result, in the map image 40 according to Fig. 3, important streets like highways 53 and motorways 52 are displayed over the whole map image 40 all the time, whereas smaller streets are displayed only around a portion of the calculated route 51. Advantageously, the driver is able to leave the calculated route 51 for alternative streets, e.g. in case of a traffic jam on the calculated route, but he or she can also find the way back to the originally calculated route behind the route point at which the traffic jam occurred. Further, the map image 40 is dynamically changing according to the vehicle position, thereby maintaining the detailed partial view 42 including a portion of the route 51.

The benefits of a map image as shown in Fig. 3 are specifically that the overview of the map image is improved, wherein only relevant lower function class streets are displayed on the display screen. This improves the possibility to recognize important information at one glance which results in a more relaxed navigation map handling and perception. As the partial view is dynamically generated around the route, the user has still the possibility to take streets which are not on the route but nearby the route, and the user can easily find the way back to the originally calculated route. In this regard, as shown in Fig. 3, the partial view 42 preferably includes map data which are predominantly in front of the driver's current position 57 so that important information in front of the vehicle's current position can easily be recognized. The displayed streets are mainly in front of the vehicle's current position.

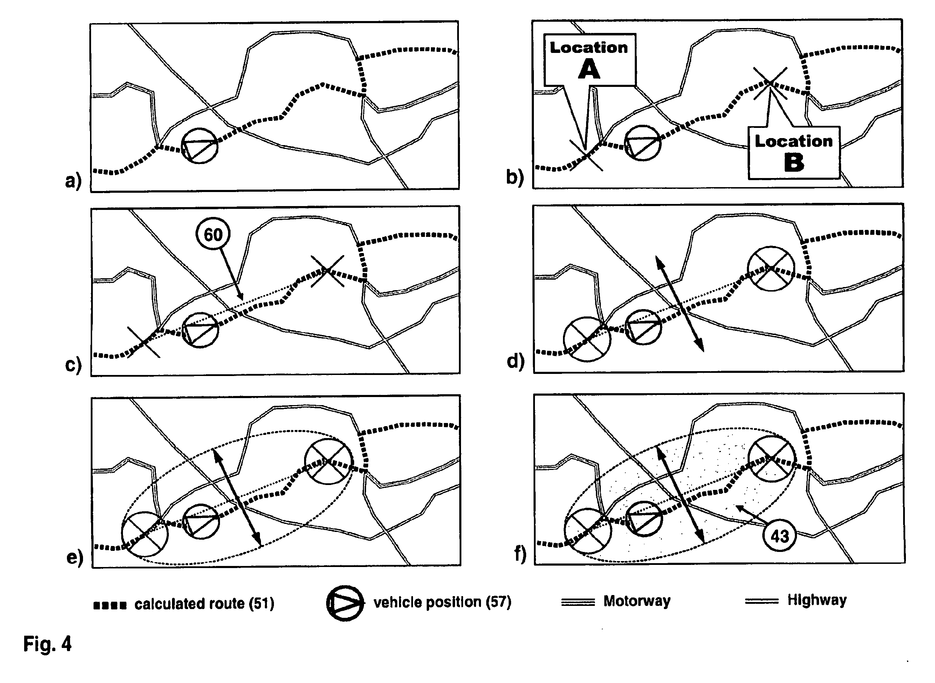

Fig. 4 illustrates various sequential steps according to an embodiment of the invention in a process of generating a map image 40 as shown in Figs. 2 and 3. According to Fig. 4a), in a first step the vehicle position 57 and the route data indicative of the calculated route 51 are determined by the system. As shown in Fig. 4b), a first location A behind and a second location B in front of the vehicle's current position 57 on the calculated route 51 are defined. Preferably, the display control unit is adapted for defining the first location A closer to the vehicle's current position 57 than the second location B as illustrated. As shown in Fig. 4c), thereafter the display control unit 61 creates a connection 60 between the first location A and the second location B and creates, as shown in Fig. 4d) to Fig. 4f), an image area 43 surrounding the connection 60 previously created as an image area for displaying the partial view 42. In this process step, a width of the image area 43 is determined for creating the area dimensions, indicated by an arrow perpendicular to the connection 60. In this embodiment, an elliptical image area 43 is "laid around" the connection 60 and the arrow intersecting the connection, as shown.

As shown in Fig. 4, the image area 43 comprises a corridor-like shape, which is specifically of approximately elliptical form. These described process steps are, of course, not visible for the user of the navigation system, but rather represent internal calculation and processing steps within the display control unit 61.

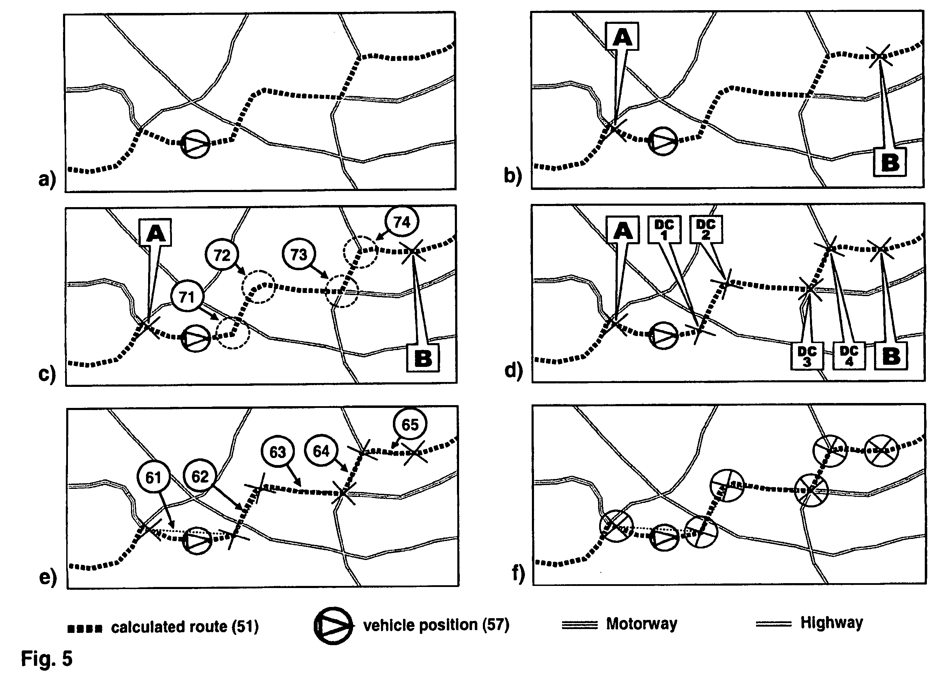

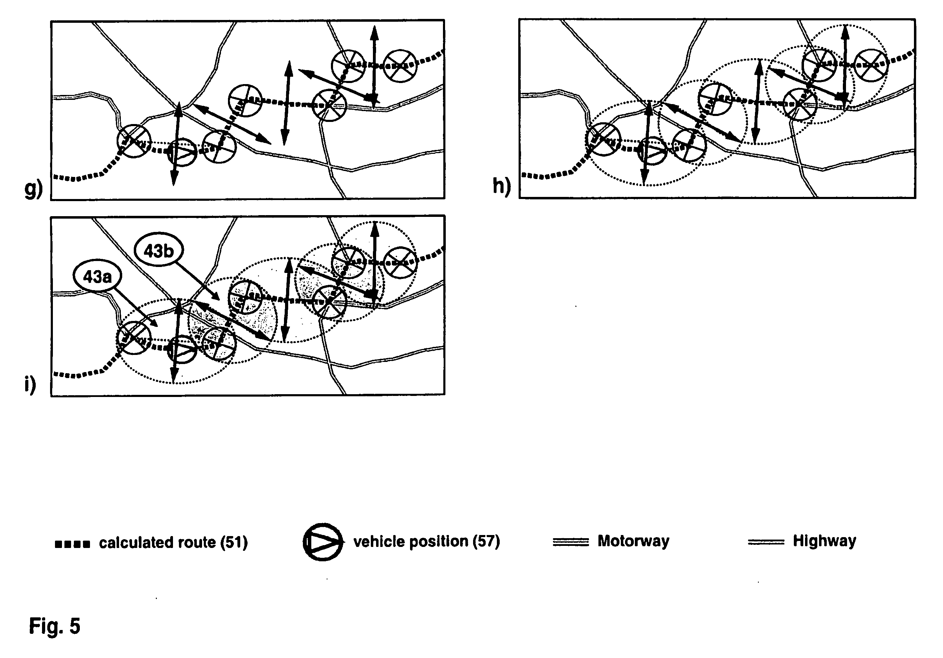

Fig. 5 illustrates other various sequential steps in a process of generating a map image according to another embodiment of the invention. The basic principle is similar to that described with reference to Fig. 4. Specifically, the first location A and the second location B are determined in a similar way behind and in front of a user's current position 57 (Fig. 5a) and Fig. 5b)). In the present case, the location A is closer to the user's current position 57 than location B. Next, according to Fig. 5c) further locations between the first location A and the second location B may be created by the display control unit 61 at respective points 71 to 74 of a direction change or a manoeuvre on the route 51. For example, the point 71 is a route point on the calculated route 51 at which a change of the route direction occurs in a specified angle, for example an angle of at least 45°, resulting in a rather extreme direction change. The same may be applied analogously for any manoeuvre points.

As seen from Fig. 5d), a third location DC1 between the first location A and the second location B on the calculated route 51 is defined. Moreover, any other fourth location DC2, fifth location DC3 and sixth location DC4, or even more locations, may be defined at respective route points as discussed above between the third location DC1 and the second location B on the calculated route. Further, as shown in Fig. 5e) and Fig. 5f), a first connection 61 between the first location A and the third location DC1 is defined, and a second connection 62 between the third location DC1 and the fourth location DC2. Subsequently, a connection 63 is defined between locations DC2 and DC3, a connection 64 is defined between locations DC3 and DC4, and a connection 65 is defined between location DC4 and location B.

As shown in Fig. 5g) to Fig. 5i), the display control unit 61 is adapted for creating a first image area 43a surrounding the first connection 61 between locations A and DC1 and a second image area 43b surrounding the second connection 62, and so on, wherein the first and the second image area and all further such image areas are forming the image area 43 for displaying the partial view 42. Here, again the width of the respective image areas (indicated by respective arrows perpendicular to the corresponding connections) is determined for creating the area dimensions, as shown. In this manner, an image area of a "free form shape" can be created depending on the specific circumstances involving the specific route data.

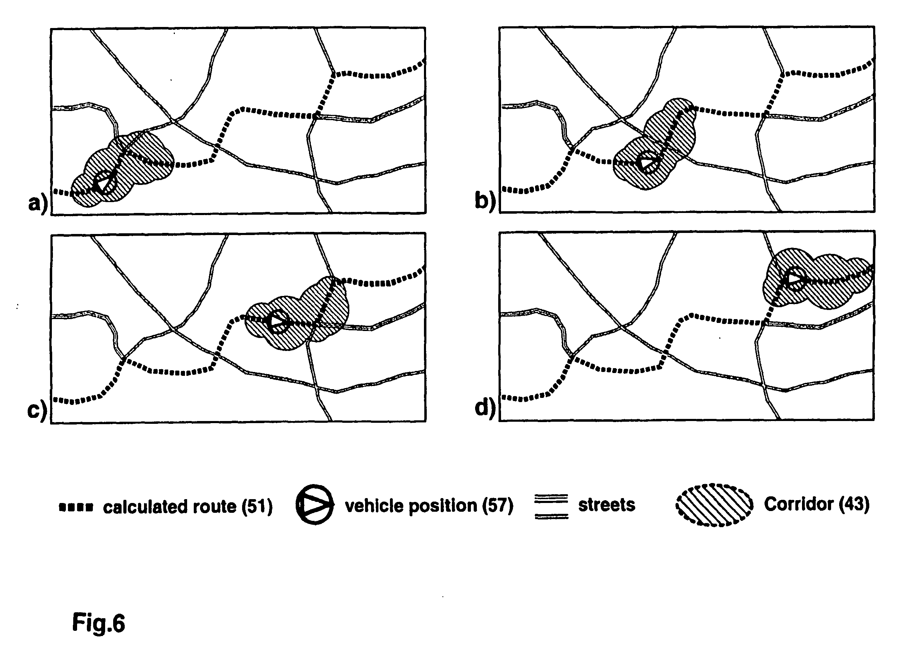

In this concern, Fig. 6 illustrates various examples of embodiments of creating a partial view within a map image according to the invention. In particular, the partial view defined by the corridor 43 may depend on map data in proximity of the calculated route 51 and/or on route direction change points. Such map data in proximity of the calculated route may be, for example, bridges, borders, one-way streets or rivers which may allow only a constricted choice for the route or a constricted choice for driving past a traffic jam or the like on the predetermined route. In such cases, the partial view may only extend to such areas on the map which are appropriate for the route or which are appropriate for driving past certain points on the route. Moreover, the specific shape of the partial view may be adapted to the speed indication of the street which is part of the route and may be adapted to a speed value as described herein before. In any case, according to the invention, the partial view is created such that the streets and points of interest around the route and in front of the vehicle's position are easy to recognize. Hence, the driver can leave the calculated route on his own decision and can find and take other streets around the route by his free selection. After having left the route, the driver is still able to find the way back to the originally calculated route.

Optionally, the driver may select, for example by means of the remote control unit 25 as shown in Figure 1, the size and/or the scale of the partial view, of the vicinity view and/or of the map image as a whole. Further, the driver may switch between a map image with and a map image without a partial view by free selection.

## Claims

1. Electronic route display system, comprising
a display screen (37) adapted to display a map image (40),
a display control unit (61) for generating image control signals (82) for displaying the map image (40) on the display screen (37),
the display control unit (61) adapted to process route data (81) which are indicative of a calculated route (51),
the display control unit (61) adapted to generate partial image control signals for generating a partial view (42) within the map image (40),
the display control unit (61) adapted to generate vicinity image control signals for generating a vicinity view (41) within the map image (40) adjacent the partial view (42), wherein the partial view (42) displays map data in greater detail than the vicinity view (41),
wherein the display control unit (61) is adapted to generate the partial view (42) depending on the route data (81), wherein the partial view (42) is generated including at least a portion of the route (51), said display system charactrized in that
the display control unit (61) is adapted to receive a vehicle position from a vehicle position detection device (17), receive an allowed vehicle speed in accordance with a used street from a map information memory (19) and generate the partial view (42) depending on the allowed vehicle speed.

2. The electronic route display system according to claim 1, wherein the display control unit (61) is adapted to generate the partial view (42) including map data of at least a first function class (52, 53) and a second function class (54 - 56), and is adapted to generate the vicinity view (41) including map data of only the first function class (52, 53).

3. The electronic route display system according to claim 2, wherein the map data of the first function class (52, 53) are of higher importance than the map data of the second function class (54 - 56).

4. The electronic route display system according to claim 2 or 3, wherein the map data of the first function class include at least one or more of the following streets: a highway (53), a motorway (52) and a connecting street.

5. The electronic route display system according to one of claims 2 to 4, wherein the map data of the first function class include points of interest (POI) or landmarks of higher importance than the map data of the second function class.

6. The electronic route display system according to anyone of claims 1 to 5, wherein the display control unit (61) is adapted to generate the partial view (42) including map data predominantly in front of a user's current position (57) on the calculated route.

7. The electronic route display system according to any one of claims 1 to 6, wherein the display control unit (61) is adapted for
- determining a user's current position (57) and route data indicative of a calculated route (51),
- defining a first location (A) behind and a second location (B) in front of the user's current position (57) on the calculated route (51),
- defining a connection (60) between the first and the second location (A, B),
- creating an image area (43) surrounding the connection (60) as an image area for displaying the partial view (42).

8. The electronic route display system according to any one of claims 1 to 7, wherein the display control unit (61) is adapted for
- determining a user's current position (57) and route data indicative of a calculated route (51),
- defining a first location (A) behind and a second location (B) in front of the user's current position (57) on the calculated route (51),
- defining a third location (DC1) between the first location (A) and the second location (B) on the calculated route,
- defining a first connection (61) between the first location (A) and the third location (DC1),
- defining a second connection (62) between the third location (DC1) and the second location (B) or any other fourth location (DC2) between the third location (DC1) and the second location (B) on the calculated route,
- creating an image area (43) surrounding the first connection (61) and the second connection (62) as an image area for displaying the partial view (42).

9. The electronic route display system according to claim 7 or 8, wherein the second location (B) or the third location (DC1) is created by the display control unit (61) at a change of direction point (71 - 74) on the calculated route (51).

10. The electronic route display system according to claim 9, wherein the display control unit (61) determines the change of direction point (71 -74) at a route point at which a change of the route direction in a specified angle occurs.

11. The electronic route display system according to claim 8, wherein the display control unit (61) is adapted for creating a first image area (43a) surrounding the first connection (61) and a second image area (43b) surrounding the second connection (62), the first and second image areas forming the image area (43) for displaying the partial view (42).

12. The electronic route display system according to any one of claims 7 to 11, wherein the display control unit (61) is adapted for defining the first location (A) closer to the user's current position (57) than the second location (B).

13. The electronic route display system according to any one of claims 1 to 12, wherein the display control unit (61) is adapted to generate the partial view (42) depending on map data in proximity of the calculated route (51), in particular depending on at least one of the following map data: a bridge, a border, a one-way street and a river in proximity of the calculated route.

14. The electronic route display system according to any one of claims 1 to 13, wherein the display control unit (61) is adapted to generate a corridor-like partial view (42, 43) within the map image (40).

15. The electronic route display system according to any one of claims 1 to 14, wherein the display control unit (61) is adapted to generate a partial view of substantially elliptical shape (42, 43).

16. The electronic route display system according to any one of claims 1 to 15, including a digital map information memory (19) adapted to store street type data, the display control unit (61) adapted to receive the street type data for displaying the respective streets in the partial and the vicinity view (42, 41) depending on the street type (52 - 56).

17. A navigation system comprising an electronic route display system (11) according to any one of claims 1 to 16.

18. The navigation system of claim 17, wherein the navigation system is implemented within a vehicle adapted to move the user therein.

19. A computer system comprising an electronic route display system (11) according to any one of claims 1 to 16.

20. A method for displaying a route within a map image, the method comprising the steps of:
processing route data (81) which are indicative of a calculated route (51),
generating a partial view (42) depending on the processed route data (81), wherein the partial view (42) is generated including at least a portion of the route (51),
displaying the partial view (42) within a map image (40) on a display screen (37), and displaying a vicinity view (41) within the map image (40) adjacent the partial view (42), wherein the partial view (42) displays map data in greater detail than the vicinity view (41), **characterized by**:
receiving a vehicle position from a vehicle position detection device (17), and receiving an allowed vehicle speed in accordance with a used street from a map information memory (19), and
the partial view (42) being generated depending on the allowed vehicle speed.

21. The method of claim 20, wherein the partial view (42) is generated dynamically including at least a portion of the route (51).

## Patentansprüche

1. Elektronisches Routendarstellungssystem, aufweisend:
einen Bildschirm (37), der angepasst ist, ein Kartenbild (40) darzustellen,
eine Darstellungssteuerungseinheit (61) zur Erzeugung von Bildsteuersignalen (82) zur Darstellung des Kartenbilds (40) auf dem Bildschirm (37),
wobei die Darstellungssteuerungseinheit (61) angepasst ist, Routendaten (81) zu verarbeiten, welche für eine berechnete Route (51) bezeichnend sind,
wobei die Darstellungssteuerungseinheit (61) angepasst ist, Teilbildsteuersignale zur Erzeugung einer Teilansicht (42) innerhalb des Kartenbilds (40) zu generieren,
wobei die Darstellungssteuerungseinheit (61) angepasst ist, Umgebungsbildsteuersignale zur Erzeugung einer Umgebungsansicht (41) innerhalb des Kartenbilds (40) benachbart zu der Teilansicht (42) zu generieren, wobei die Teilansicht (42) Kartendaten in größerem Detail als die Umgebungsansicht (41) darstellt,
wobei die Darstellungssteuerungseinheit (61) angepasst ist, die Teilansicht (42) abhängig von den Routendaten (81) zu generieren, wobei die Teilansicht (42) generiert wird, so dass sie wenigstens einen Teil der Route (51) beinhaltet, wobei das Darstellungssystem **dadurch gekennzeichnet ist, dass** die Darstellungssteuerungseinheit (61) angepasst ist, eine Fahrzeugposition von einer Fahrzeugpositionsdetektionsvorrichtung (17) zu empfangen, eine erlaubte Fahrzeuggeschwindigkeit gemäß einer benutzten Straße von einem Karteninformationsspeicher (19) zu empfangen und die Teilansicht (42) abhängig von der erlaubten Fahrzeuggeschwindigkeit zu generieren.

2. Elektronisches Routendarstellungssystem gemäß Anspruch 1, wobei die Darstellungssteuerungseinheit (61) angepasst ist, die Teilansicht (42) mit Kartendaten wenigstens einer ersten Funktionsklasse (52, 53) und einer zweiten Funktionsklasse (54 - 56) zu generieren, und angepasst ist, die Umgebungsansicht (41) mit Kartendaten nur der ersten Funktionsklasse (52, 53) zu generieren.

3. Elektronisches Routendarstellungssystem gemäß Anspruch 2, wobei die Kartendaten der ersten Funktionsklasse (52, 53) von höherer Wichtigkeit sind als die Kartendaten der zweiten Funktionsklasse (54 - 56).

4. Elektronisches Routendarstellungssystem gemäß Anspruch 2 oder 3, wobei die Kartendaten der ersten Funktionsklasse wenigstens eine oder mehrere der folgenden Straßen beinhaltet: eine Autobahn (53), eine Schnellstraße (52) und eine Verbindungsstraße.

5. Elektronisches Routendarstellungssystem gemäß einem der Ansprüche 2 bis 4, wobei die Kartendaten der ersten Funktionsklasse interessante Orte (Points of Interest: POI) oder Landmarken von höherer Wichtigkeit beinhalten als die Kartendaten der zweiten Funktionsklasse.

6. Elektronisches Routendarstellungssystem gemäß einem der Ansprüche 1 bis 5, wobei die Darstellungssteuerungseinheit (61) angepasst ist, die Teilansicht (42) mit Kartendaten vornehmlich vor einer gegenwärtigen Benutzerposition (57) auf der berechneten Route befindlich zu generieren.

7. Elektronisches Routendarstellungssystem gemäß einem der Ansprüche 1 bis 6, wobei die Darstellungssteuerungseinheit (61) angepasst ist für:
- Bestimmung einer gegenwärtigen Benutzerposition (57) und von Routendaten, die für eine berechnete Route (51) bezeichnend sind,
- Definieren eines ersten Ortes (A) hinter und eines zweiten Ortes (B) vor der gegenwärtigen Benutzerposition (57) auf der berechneten Route (51),
- Definieren einer Verbindung (60) zwischen dem ersten und dem zweiten Ort (A, B),
- Schaffen eines Bildbereichs (43), der die Verbindung (60) als einen Bildbereich zur Darstellung der Teilansicht (42) umgibt.

8. Elektronisches Routendarstellungssystem gemäß einem der Ansprüche 1 bis 7, wobei die Darstellungssteuerungseinheit (61) angepasst ist für:
- Bestimmung einer gegenwärtigen Benutzerposition (57) und von Routendaten, die für eine berechnete Route (51) bezeichnend sind,
- Definieren eines ersten Ortes (A) hinter und eines zweiten Ortes (B) vor der gegenwärtigen Benutzerposition (57) auf der berechneten Route (51),
- Definieren eines dritten Ortes (DC1) zwischen dem ersten Ort (A) und dem zweiten Ort (B) auf der berechneten Route,
- Definieren einer ersten Verbindung (61) zwischen dem ersten Ort (A) und dem dritten Ort (DC1),
- Definieren einer zweiten Verbindung (62) zwischen dem dritten Ort (DC1) und dem zweiten Ort (B) oder einem anderen vierten Ort (DC2) zwischen dem dritten Ort (DC1) und dem zweiten Ort (B) auf der berechneten Route,
- Schaffen eines Bildbereichs (43), der die erste Verbindung (61) und die zweite Verbindung (62) als einen Bildbereich zur Darstellung der Teilansicht (42) umgibt.

9. Elektronisches Routendarstellungssystem gemäß Anspruch 7 oder 8, wobei der zweite Ort (B) oder der dritte Ort (DC1) durch die Darstellungssteuerungseinheit (61) an einem Punkt mit einer Richtungsänderung (71 - 74) auf der berechneten Route (51) geschaffen wird.

10. Elektronisches Routendarstellungssystem gemäß Anspruch 9, wobei die Darstellungssteuerungseinheit (61) den Punkt der Richtungsänderung (71 - 74) an einem Routenpunkt bestimmt, an welchem eine Änderung der Routenrichtung in einem spezifizierten Winkel auftritt.

11. Elektronisches Routendarstellungssystem gemäß Anspruch 8, wobei die Darstellungssteuerungseinheit (61) angepasst ist zur Schaffung eines ersten Bildbereichs (43a), der die erste Verbindung (61) umgibt, und eines zweiten Bildbereichs (43b), der die zweite Verbindung (62) umgibt, wobei der erste und zweite Bildbereich den Bildbereich (43) zur Darstellung der Teilansicht (42) bilden.

12. Elektronisches Routendarstellungssystem gemäß einem der Ansprüche 7 bis 11, wobei die Darstellungssteuerungseinheit (61) angepasst ist, den ersten Ort (A) näher an der gegenwärtigen Benutzerposition (57) zu definieren als den zweiten Ort (B).

13. Elektronisches Routendarstellungssystem gemäß einem der Ansprüche 1 bis 12, wobei die Darstellungssteuerungseinheit (61) angepasst ist, die Teilansicht (42) abhängig von Kartendaten in der Nähe der berechneten Route (51) zu generieren, insbesondere abhängig von wenigstens einem der folgenden Kartendaten: eine Brücke, eine Grenze, eine Einbahnstraße und ein Fluss in der Nähe der berechneten Route.

14. Elektronisches Routendarstellungssystem gemäß einem der Ansprüche 1 bis 13, wobei die Darstellungssteuerungseinheit (61) angepasst ist, eine Korridor-ähnliche Teilansicht (42, 43) innerhalb des Kartenbilds (40) zu generieren.

15. Elektronisches Routendarstellungssystem gemäß einem der Ansprüche 1 bis 14, wobei die Darstellungssteuerungseinheit (61) angepasst ist, eine Teilansicht von im Wesentlichen elliptischer Form (42, 43) zu generieren.

16. Elektronisches Routendarstellungssystem gemäß einem der Ansprüche 1 bis 15, beinhaltend einen Speicher für digitale Karteninformation (19), der angepasst ist, Straßentypdaten zu speichern, wobei die Darstellungssteuerungseinheit (61) angepasst ist, die Straßentypdaten zu empfangen für das Darstellen der jeweiligen Straße in der Teilansicht und der Umgebungsansicht (42, 41) abhängig von dem Straßentyp (52 - 56).

17. Navigationssystem mit einem elektronischen Routendarstellungssystem (11) gemäß einem der Ansprüche 1 bis 16.

18. Navigationssystem nach Anspruch 17, wobei das Navigationssystem in einem Fahrzeug implementiert ist, das angepasst ist, den Benutzer darin zu bewegen.

19. Computersystem mit einem elektronischen Routendarstellungssystem (11) gemäß einem der Ansprüche 1 bis 16.

20. Verfahren zur Darstellung einer Route innerhalb eines Kartenbilds, wobei das Verfahren die Schritte aufweist:
- Verarbeiten von Routendaten (81), welche für eine berechnete Route (51) bezeichnend sind,
- Generieren einer Teilansicht (42) abhängig von den verarbeiteten Routendaten (81), wobei die Teilansicht (42) so generiert wird, dass sie wenigstens einen Teil der Route (51) beinhaltet,
- Darstellen der Teilansicht (42) in einem Kartenbild (40) auf einem Bildschirm (37), und Darstellen einer Umgebungsansicht (41) innerhalb des Kartenbilds (40) benachbart zu der Teilansicht (42), wobei die Teilansicht (42) Kartendaten in größerem Detail darstellt als die Umgebungsansicht (41), **gekennzeichnet durch**:
Empfangen einer Fahrzeugposition von einer Fahrzeugpositionsdetektionsvorrichtung (17), und Empfangen einer erlaubten Fahrzeuggeschwindigkeit gemäß einer benutzten Straße von einem Karteninformationsspeicher (19), und
wobei die Teilansicht (42) abhängig von der erlaubten Fahrzeuggeschwindigkeit generiert wird.

21. Verfahren nach Anspruch 20, wobei die Teilansicht (42) dynamisch generiert wird, wobei sie wenigstens einen Teil der Route (51) beinhaltet.

## Revendications

1. Système d'affichage d'itinéraire électronique comprenait :
un écran d'affichage (37) adapté pour afficher une image de carte (40),
une unité de commande d'affichage (61) pour générer des signaux de commande d'image (82) pour afficher l'image de carte (40) sur l'écran d'affichage (37),
l'unité de commande d'affichage (61) étant adaptée pour traiter des données d'itinéraire (81) qui sont représentatives d'un itinéraire calculé (51),
l'unité de commande d'affichage (61) étant adaptée pour générer des signaux de commande d'image partielle pour générer une vue partielle (42) dans l'image de carte (40),
l'unité de commande d'affichage (61) étant adaptée pour générer des signaux de commande d'image de voisinage pour générer une vue de voisinage (41) dans l'image de carte (40) adjacente à la vue partielle (42), la vue partielle (42) affichant des données de carte plus détaillées que la vue de voisinage (41),
dans lequel l'unité de commande d'affichage (61) est adaptée pour générer la vue partielle (42) en fonction des données d'itinéraire (81), dans lequel la vue partielle (42) est générée en incluant au moins une partie de l'itinéraire (51), ledit système d'affichage étant **caractérisé en ce que** l'unité de commande d'affichage (61) est adaptée pour recevoir une position de véhicule d'un dispositif de détection de position de véhicule (17), recevoir d'une mémoire d'informations de carte (19) une vitesse de véhicule autorisée en conformité avec une voie utilisée et générer la vue partielle (42) en fonction de la vitesse de véhicule autorisée.

2. Système d'affichage d'itinéraire électronique selon la revendication 1, dans lequel l'unité de commande d'affichage (61) est adaptée pour générer la vue partielle (42) incluant les données de carte d'au moins une première classe de fonction (52, 53) et une deuxième classe de fonction (54-56), et est adaptée pour générer la vue de voisinage (41) incluant les données de carte de la première classe de fonction (52, 53) uniquement.

3. Système d'affichage d'itinéraire électronique selon la revendication 2, dans lequel les données de carte de la première classe de fonction (52, 53) ont une importance plus élevée que les données de carte de la deuxième classe de fonction (54-56).

4. Système d'affichage d'itinéraire électronique selon la revendication 2 ou 3, dans lequel les données de carte de la première classe de fonction comprennent au moins l'une ou plusieurs des voies suivantes : une route nationale (53), une autoroute (52) et une voie de jonction.

5. Système d'affichage d'itinéraire électronique selon l'une des revendications 2 à 4, dans lequel les données de carte de la première classe de fonction comprennent des points d'intérêt (POI) ou des points de repère ayant une importance plus élevée que les données de carte de la deuxième classe de fonction.

6. Système d'affichage d'itinéraire électronique selon l'une quelconque des revendications 1 à 5, dans lequel l'unité de commande d'affichage (61) est adaptée pour générer la vue partielle (42) incluant des données de carte principalement devant une position actuelle de l'utilisateur (57) sur l'itinéraire calculé.

7. Système d'affichage d'itinéraire électronique selon l'une quelconque des revendications 1 à 6, dans lequel l'unité de commande d'affichage (61) est adaptée pour :
- déterminer une position actuelle de l'utilisateur (57) et des données d'itinéraire représentatives d'un itinéraire calculé (51),
- définir une première position (A) derrière et une deuxième position (B) devant la position actuelle de l'utilisateur (57) sur l'itinéraire calculé (51),
- définir une connexion (60) entre les première et deuxième positions (A, B),
- créer une zone d'image (43) entourant la connexion (60) comme zone d'image pour afficher la vue partielle (42).

8. Système d'affichage d'itinéraire électronique selon l'une quelconque des revendications 1 à 7, dans lequel l'unité de commande d'affichage (61) est adaptée pour :
- déterminer une position actuelle de l'utilisateur (57) et des données d'itinéraire représentatives d'un itinéraire calculé (51),
- définir une première position (A) derrière et une deuxième position (B) devant la position actuelle de l'utilisateur (57) sur l'itinéraire calculé (51),
- définir une troisième position (DC1) entre la première position (A) et la deuxième position (B) sur l'itinéraire calculé,
- définir une première connexion (61) entre la première position (A) et la troisième position (DC1),
- définir une deuxième connexion (62) entre la troisième position (DC1) et la deuxième position (B) ou n'importe quelle autre quatrième position (DC2) entre la troisième position (DC1) et la deuxième position (B) sur l'itinéraire calculé,
- créer une zone d'image (43) entourant la première connexion (61) et la deuxième connexion (62) comme zone d'image pour afficher la vue partielle (42).

9. Système d'affichage d'itinéraire électronique selon la revendication 7 ou 8, dans lequel la deuxième position (B) ou la troisième position (DC1) est créée par l'unité de commande d'affichage (61) à un point de changement de direction (71-74) sur l'itinéraire calculé (51).

10. Système d'affichage d'itinéraire électronique selon la revendication 9, dans lequel l'unité de commande d'affichage (61) détermine le point de changement de direction (71-74) en un point d'itinéraire auquel se produit un changement de la direction d'itinéraire selon un angle spécifié.

11. Système d'affichage d'itinéraire électronique selon la revendication 8, dans lequel l'unité de commande d'affichage (61) est adaptée pour créer une première zone d'image (43a) entourant la première connexion (61) et une deuxième zone d'image (43b) entourant la deuxième connexion (62), les première et deuxième zones d'image formant la zone d'image (43) pour afficher la vue partielle (42).

12. Système d'affichage d'itinéraire électronique selon l'une quelconque des revendications 7 à 11, dans lequel l'unité de commande d'affichage (61) est adaptée pour définir la première position (A) plus près de la position actuelle de l'utilisateur (57) que la deuxième position (B).

13. Système d'affichage d'itinéraire électronique selon l'une quelconque des revendications 1 à 12, dans lequel l'unité de commande d'affichage (61) est adaptée pour générer la vue partielle (42) en fonction de données de carte à proximité de l'itinéraire calculé (51), en particulier en fonction d'au moins l'une des données de carte suivantes : un pont, une frontière, une voie à sens unique et une rivière à proximité de l'itinéraire calculé.

14. Système d'affichage d'itinéraire électronique selon l'une quelconque des revendications 1 à 13, dans lequel l'unité de commande d'affichage (61) est adaptée pour générer une vue partielle en couloir (42, 43) dans l'image de carte (40).

15. Système d'affichage d'itinéraire électronique selon l'une quelconque des revendications 1 à 14, dans lequel l'unité de commande d'affichage (61) est adaptée pour générer une vue partielle de forme sensiblement elliptique (42, 43).

16. Système d'affichage d'itinéraire électronique selon l'une quelconque des revendications 1 à 15, comprenant une mémoire d'informations de carte numérique (19) adaptée pour stocker des données de type de voie, l'unité de commande d'affichage (61) étant adaptée pour recevoir les données de type de voie pour afficher les voies respectives dans la vue partielle et dans la vue de voisinage (42, 41) en fonction du type de voie (52-56).

17. Système de navigation comprenant un système d'affichage d'itinéraire électronique (11) selon l'une quelconque des revendications 1 à 16.

18. Système de navigation selon la revendication 17, dans lequel le système de navigation est mis en oeuvre dans un véhicule adapté pour déplacer l'utilisateur.

19. Système informatique comprenant un système d'affichage d'itinéraire électronique (11) selon l'une quelconque des revendications 1 à 16.

20. Procédé d'affichage d'un itinéraire dans une image de carte, le procédé comprenant les étapes suivantes :
traiter des données d'itinéraire (81) qui sont représentatives d'un itinéraire calculé (51),
générer une vue partielle (42) dépendant des données d'itinéraire traitées (81), la vue partielle (42) étant générée en incluant au moins une partie de l'itinéraire (51),
afficher la vue partielle (42) dans une image de carte (40) sur un écran d'affichage (37), et afficher une vue de voisinage (41) dans l'image de carte (40), adjacente à la vue partielle (42), la vue partielle (42) affichant des données de carte plus détaillées que la vue de voisinage (41), **caractérisé par** :
la réception d'une position de véhicule provenant d'un dispositif de détection de position de véhicule (17), et la réception en provenance d'une mémoire d'informations de carte (19) d'une vitesse de véhicule autorisée en conformité avec une voie utilisée, et
la vue partielle (42) étant générée en fonction de la vitesse de véhicule autorisée.

21. Procédé selon la revendication 20, dans lequel la vue partielle (42) est générée de façon dynamique en incluant au moins une partie de l'itinéraire (51).
